Europäisches Patentamt

European Patent Office

Office européen des brevets

(19)

(11) Publication number: **0 331 987**
**A2**

# EUROPEAN PATENT APPLICATION

(21) Application number: 89103227.8

(22) Date of filing: 24.02.89

(51) Int. Cl.4: **C08J 5/18 , C08J 3/20 ,**
**C08L 21/00 , C08K 7/00 ,**
**//F16D69/02**

(30) Priority: **11.03.88 GB 8805861**

(43) Date of publication of application:
**13.09.89 Bulletin 89/37**

(84) Designated Contracting States:
**AT CH DE ES FR IT LI**

(71) Applicant: **TBA Industrial Products Limited**
**20, St. Mary's Parsonage**
**Manchester M3 2NL(GB)**

(72) Inventor: **Hoyes, John Robert**
**2 The Brook Calderbrook Road**
**Littleborough Lancs, OL15 9NW(GB)**
Inventor: **Thomas, David Anthony**
**20 Rose Avenue**
**Littleborough Lancs, OL15 8QJ(GB)**
Inventor: **Watson, Timothy**

**deseased(GB)**

(74) Representative: **Newman, Dennis Daniel**
**Ernest et al**
**Bowdon House Ashburton Road West**
**Trafford Park**
**Manchester M17 1RA(GB)**

(54) **Fibre-reinforced elastomeric sheet.**

(57) In the manufacture of fibre-reinforced elastomeric sheet from a non-asbestos solvent-containing uncured elastomer dough containing reinforcing fibres, curing agent and optionally non-fibrous filler, by progressively forming the dough into a sheet on the surface of a heated cylinder with evaporation of the solvent, said dough containing both relatively rigid inorganic reinforcing fibres (eg glass fibres) and other reinforcing fibres interlockable therewith (eg polyacrylic fibres), there is employed a dough which additionally includes inorganic material in the form of flakes.

Such flake material may be provided by flake graphite (natural or exfoliated), or flakes of mica or exfoliated vermiculite.

Xerox Copy Centre

## Fibre-reinforced elastomeric sheet

This invention relates to fibre-reinforced elastomeric sheet especially, but not exclusively, for use in the manufacture of gaskets.

Such sheets have been known since the turn of the century, and a very widely used formulation utilises asbestos fibres as reinforcement. Recently, asbestos has been replaced by glass fibres. Glass fibres are physically and chemically very different from asbestos and it has accordingly been necessary to develop new formulations in order to arrive at a satisfactory product using traditional processing equipment and methods

The best known method of manufacture is the "IT" calendering process, which was invented before 1900. In this process an uncured elastomer dough comprising reinforcing fibres, elastomer, elastomer-solvent, curing agent, and optionally non-fibrous filler such as precipitated calcium carbonate, carbon black, finely divided barytes, silica, or a silicate such as clay, is progressively formed into a sheet on the surface of a heated cylinder, usually by means of an auxiliary unheated roller. The sheet is built up gradually as a series of very thin layers to allow the solvent to evaporate from the dough during curing on the heated cylinder. When a desired thickness has been achieved, the cured sheet is cut across and removed from the cylinder, for processing into gaskets or other products.

The foregoing process has been used to make asbestos- and, as described in our US Patent 4 463 109, glass-fibre-reinforced elastomeric sheets also.

More recently, in US Patent 4 508 777 entitled "Compressed non-asbestos sheets", it has been proposed to make compressed non-asbestos fibre-reinforced elastomeric sheets of improved mechanical strength and sealing properties using as fibre reinforcement a mixture of fibres, including a mixture of relatively rigid inorganic non-asbestos fibre (for example: glass fibre, rock wool, slag wool, wollastonite, boron fibre, or ceramic fibres such as alkali metal titanate fibres) with interlockable fibres (for example: polyamide, polyester, polyacrylonitrile or phenol fibres; protein fibres such as silk; or cellulosic fibres). According to the preferred method of US 4 508 777, and as illustrated in 13 of the 15 working examples therein, there is first made a 'preformed' sheet by cold rolling a non-asbestos solvent-containing uncured elastomer dough containing the mixture of reinforcing fibres, and curing agent and fillers. The sheeting thus formed is unwound from the roll, and the preformed sheet is then put in a press heated to elastomer-vulcanisation temperature (usually 60-200°C), degasified from time to time to evaporate the solvent completely, and then pressed into the desired form. Two or more of the resulting sheets are then formed into a laminate under elevated pressure (eg 90 kgf/cm²) and temperature (eg 130°C), typically for about 30 minutes.

In an alternative procedure (column 7 lines 41-50 and Examples 5 and 11), US 4 508 777 directs that the elastomer dough should be laminated on a heated roll to obtain a sheet which is in turn preferably further pressed, simultaneously with the application of heat.

The present invention is concerned with the production of non-asbestos fibre-reinforced elastomeric sheet having the improved mechanical strength and sealing properties attainable by use of a mixed fibre system as disclosed in US 4 508 777, but without the complication of a compression step separate from that compression on the heated cylinder which is inevitably involved in the standard IT process as outlined earlier.

In the manufacture according to the invention of fibre-reinforced elastomeric sheet from a non-asbestos solvent-containing uncured elastomer dough containing reinforcing fibres, curing agent and optionally non-fibrous filler, by progressively forming the dough into a sheet on the surface of a heated cylinder with evaporation of the solvent, said dough containing both relatively rigid inorganic reinforcing fibres and other reinforcing fibres interlockable therewith, there is employed a dough which additionally includes inorganic material in the form of flakes.

By the term 'flakes' we mean plate-like particles retained on a sieve of aperture 89μm.

Suitable flake material is provided by flake graphite (natural or exfoliated), or flakes of mica or exfoliated vermiculite. Ordinarily the content of flake material by weight of total solids of the elastomer dough will be at least 10%, preferably at least 15%. A proportion in the range 20-60% is particularly preferred.

As the relatively rigid reinforcing fibres we prefer to use glass fibres, rock wool, slag wool, ceramic fibres or carbon fibres. Preferably, the reinforcing fibres that are interlockable with the relatively rigid fibres are those that owe their interlockability to being fibrillated: that is to say, they each have a number of branches of relatively small diameter which are accordingly flexible enough to intertwine readily with the relatively rigid fibres. Examples are: fibrillated polytetrafluroethylene, polyacrylic and aramid (polyaromaticamide) fibres. (Fibrillation procedures are well known and need not be described here, for

2

fibrillated fibres are articles of commerce.) Interlocking of the two types of fibre leads to improved cross strength of the sheet product ie in a direction perpendicular to the direction of rotation of the heated cylinder.

The elastomer employed to make the dough may be any of those conventionally employed, for example styrene butadiene rubber (SBR), nitrile rubber (NBR), chloroprene rubber, polyisobutylene, fluoroelastomers, PVC, chlorosulphonated polyethylene, natural rubber and mixtures of these polymeric materials. An advantage obtainable by use of the invention is that it enables a product to be obtained which has the desired properties of strength and resilience while yet requiring less than a 20% by weight content of elastomer in the dough, so that at elevated temperature during use as gasket material (eg 300° C) creep is kept low and flexibility is retained.

The invention is further illustrated by the following Example.

Example

An elastomer dough was made by compounding in a conventional mixer for about 1 hour a mixture of the following ingredients:

|  | kg |
|---|---|
| Nitrile butadiene rubber | 3.12 |
| E-Glass fibre (conventionally silane-treated; diameter 6μm, length 6mm) | 4.87 |
| Fibrillated aramid fibre (Kevlar K29 pulp, Merge No 1F 356) | 3.60 |
| Coarse flake natural graphite (all passing 700μm aperture sieve; 97% by weight retained on 150μm sieve) | 5.50 |
| Silica (no-fibrous filler; surface area 170 m²/gram) | 2.18 |
| Coupling agent for silica | 0.12 |
| Precipitated $CaCO_3$ | 1.30 |
| Pigment | 0.06 |
| Conventional sulphur-based curing system | 0.40 |
| Soda ash | 0.10 |
| Toluene (solvent) | 13 |
| Water | 2.3 |

In conjunction with a surface layer formulation (2 kg each side) containing only glass fibre as fibrous reinforcement as described in Example C of our US 4 463 109 previously referred to, the dough (36.5 kg) was then IT-calendered, by means of a conventional system whose heated cylinder (peripheral speed about 12 m/min) was maintained at 110-130° C, to form a sandwich-type sheet of the following properties:

| | |
|---|---|
| Sheet thickness (mm) | 1.86 |
| Density (g/cm³) | 1.256 |
| ASTM F36 Compression (%) | 19.8 |
| ASTM F36 Recovery (%) | 50 |
| ASTM F152 Tensile Strength | |
| with grain (MPa) | 25.9 |
| cross grain (MPa) | 12.5 |
| BS 1832 Stress Relaxation (MPa) | 22.2 |
| BSF 125 Hot Creep (%) | 5.1 |

The product was tough and showed no signs of brittleness even after exposure to elevated temperatures. Gaskets of the most complex and intricate shapes could be cut from it. The gaskets had clean edges, exhibited no signs of crumbling and were robust during handling before use.

The procedure described in the above Example can without difficulty be scaled up to provide sheet 2m wide.

During formation on the heated cylinder, the sheet of the invention can if desired be reinforced by the incorporation of woven wire gauze, expanded metal mesh or punched metal mesh of for example mild steel, stainless steel or coated mild steel, by conventional methods. Sheets can also be continuously formed onto solid, perforated or pegged metal strip of the type used in the production of internal combustion engine cylinder head gaskets.

Strips or rolls of the sheet can advantageously be incorporated in plaited packings, both in the core and (as a sealing element) between the layers of braiding of the packing. The sheet material can also be used to wrap the complete packing.

## Claims

1. Fibre-reinforced elastomeric sheet made from a non-asbestos solvent-containing uncured elastomer dough containing reinforcing fibres, curing agent and optionally non-fibrous filler, by progressively forming the dough into a sheet·on the surface of a heated cylinder with evaporation of the solvent, said dough containing both relatively rigid inorganic reinforcing fibres and other reinforcing fibres interlockable therewith, characterised in that the dough additionally includes inorganic material in the form of flakes.

2. Fibre-reinforced elastomeric sheet according to claim 1, in which the flake material is flake graphite.

3. Fibre-reinforced elastomeric sheet according to claim 1, in which the flake material is of mica or exfoliated vermiculite.

4. Fibre-reinforced elastomeric sheet according to claim 1, 2 or 3, in which the flake material forms at least 10% by weight of the total solids of the curable dough.

5. Fibre-reinforced elastomeric sheet according to any of claims 1 to 4, in which the reinforcing fibres that are interlockable with the relatively rigid fibres are fibrillated.

6. Fibre-reinforced elastomeric sheet according to claim 5, in which the fibrillated fibres are aramid fibres.

7. Fibre-reinforced elastomeric sheet according to any of claims 1 to 6, in which the relatively rigid fibres are glass fibres.

8. Fibre-reinforced elastomeric sheet according to any of claims 1 to 7, in which the elastomer forms less than 20% by weight of the total solids of the curable dough.